# EUROPEAN PATENT APPLICATION

(11) **EP 4 253 495 A1**
(43) Date of publication of application: **04.10.2023**
(21) Application number: 22305401.6
(22) Date of filing: 30.03.2022
(51) Int. Cl.: C09J 153/02, C08L 51/06

(54) **HOT MELT ADHESIVE WITH POLYOLEFIN WAX**

(71) Applicant: Bostik SA, 92700 Colombes (FR)
(72) Inventor: LIBRALESSO, Laurianne, 60280 VENETTE (FR); KOMAR, Stéphanie, 60280 VENETTE (FR); BELLINI, Clement, 60280 VENETTE (FR)
(74) Representative: Arkema Patent

(57) **Abstract**

The invention relates to a hot melt adhesive composition comprising from 5 to 35 % by weight of at least one styrene block polymeric component, from 40 to 65 % by weight of at least one tackifying resin, from 15 to 40 % by weight of at least one plasticizer, from 3 to 15 % by weight of at least one polyolefin wax having an enthalpy of crystallization of at least 45 J/g, and from 0 to 5 % by weight of at least one stabilizer, based on the total weight of the hot melt adhesive composition.

The invention also relates to a process for preparing such a hot melt adhesive composition, to an article comprising such a hot melt adhesive composition and to the use of such a hot melt adhesive composition for adhering a hygiene disposable article on a fabric.

## Description

### Technical field

The present invention relates to hot melt adhesives, in particular useful for hygiene disposable articles, and more particularly for adhering feminine sanitary pads or adult incontinent products on a variety of fabrics, including those made from Lyocell fibers.

### Technical background

Hot melt adhesives (HM adhesives) are substances which are solid at room temperature and which comprise neither water nor solvent. They are applied in the molten state after heating to a temperature generally of between 120 and 250°C, most often between 130 and 180°C, and solidify during cooling, thus forming a seal (or adhesive joint) which ensures the attachment of the two substrates to be assembled. Hot melt adhesives are generally provided in the form of compositions which comprise a thermoplastic polymer and optionally a tackifying resin and a plasticizer. Among these HM adhesives, hot melt pressure sensitive adhesives (HMPSA) are substances conferring an immediate tackiness property (also called *"tack"*) to a substrate coated with such adhesive which allows its instantaneous adhesion to another substrate under a slight and brief pressure, at room temperature.

Hot melt adhesives have been used for many years in the construction of a wide variety of disposable nonwoven goods, such as disposable diapers, training pants, adult incontinent products (pads or briefs), feminine care products (napkins or pads) and surgical masks. These items aim at receiving and containing body fluids and are usually worn against or in close proximity to the skin. One specific application where HMPSA have traditionally been used is to adhere a feminine care article to a woman's undergarment. This requires a precise balance of adhesion properties to ensure the article is adhered so that its stays in place during use but is also capable of being removed without leaving residue on or damaging the undergarment. Historically, these HMPSA have been formulated using styrene block copolymers.

Hot melt adhesives are broadly used in nonwoven applications and in particular for manufacturing disposable absorbent articles.

For example, document WO 2016/149375 describes a hot melt adhesive composition based on a styrene block copolymer having an unsaturated midblock, a melt flow rate of at least about 15 g/10 minutes (190°C, 2.16 kgs) and a diblock content of no greater than about 10 % by weight.

Document WO 2016/132704 describes a hot melt adhesive comprising a thermoplastic block copolymer of a vinyl-based aromatic hydrocarbon and a conjugated diene compound and an amorphous wax modified with a carboxylic acid and/or a carboxylic anhydride.

Document CN 111440271 describes a hot melt pressure-sensitive adhesive comprising a thermoplastic elastomer, a plasticizer, a tackifying resin and a wax prepared from a metallocene polyolefin wax, maleic anhydride and an active auxiliary monomer.

Document JP 2020-203977 relates to a hot melt adhesive comprising a thermoplastic elastomer, a tackifying resin, a plasticizer and a vinyl copolymer having an ethylene-carbonyl bond.

Today's undergarment market, like many other industries, is experiencing significant changes in both materials and design. Traditionally, many of the undergarments were manufactured utilizing fabrics that demonstrate similar characteristics across different regions of the world, such as natural cotton, synthetic nylon and polyester. Undergarments were also manufactured utilizing fabrics being more regionally specific, such as other synthetic fabrics having specific characteristics and properties, being surface-treated, etc. In order to further increase the user's expectation, acceptance and comfort, there is still the need for providing undergarments utilizing alternative fabrics. For example, undergarments manufactured from Lyocell fibers, particularly from eucalyptus-based Lyocell fibers, have recently been commercialized. Lyocell fabrics are made from cellulose and are environmentally friendly, tough, hypoallergenic, breathable, and they keep the undergarment drier.

There is a need for a hot melt adhesive composition exhibiting good adhesion properties on a variety of substrate materials and fabrics, and more particularly a hot melt adhesive composition that is capable to efficiently adhere hygiene disposable articles on fabrics, in particular fabrics made from Lyocell fibers, while making it possible to reduce and even avoid residues on the fabric after removal of the article.

### Summary of the invention

It is a first object of the invention to provide a hot melt adhesive composition comprising:
- from 5 to 35 % by weight of at least one styrene block polymeric component;
- from 40 to 65 % by weight of at least one tackifying resin;
- from 15 to 40 % by weight of at least one plasticizer;
- from 3 to 15 % by weight of at least one polyolefin wax having an enthalpy of crystallization of at least 45 J/g; and
- from 0 to 5 % by weight of at least one stabilizer;
based on the total weight of the hot melt adhesive composition.

In some embodiments, the at least one polyolefin wax is grafted with at least one acid anhydride and/or at least one carboxylic acid, preferably maleic anhydride.

In some embodiments, the at least one polyolefin wax has an acid value of at least 5 mg KOH/mg, preferably at least 30 mg KOH/mg, more preferably at least 40 mg KOH/mg.

In some embodiments, the at least one polyolefin wax has an enthalpy of crystallization higher than or equal to 62 J/g, preferably higher than or equal to 79 J/g, more preferably higher than or equal to 88 J/g.

In some embodiments, the at least one polyolefin wax has an enthalpy of crystallization lower than or equal to 97 J/g, preferably lower than or equal to 92 J/g.

In some embodiments, the hot melt adhesive composition comprises from 4 to 10 % by weight of the at least one polyolefin wax, based on the total weight of the hot melt adhesive composition.

In some embodiments, the at least one polyolefin wax is a polypropylene wax and/or a polyethylene wax, preferably a polypropylene wax.

In some embodiments, the at least one styrene block polymeric component has an average hardness Shore A of 60 or less, preferably from 15 to 60, more preferably from 20 to 50.

In some embodiments, the at least one styrene block polymeric component comprises, and preferably consists of:
- from 25 to 100 % by weight of at least one linear styrene block copolymer (a) having a styrene block content of 21 % or less and a hardness Shore A of 50 or less;
- from 0 to 75 % by weight of at least one linear styrene block copolymer (b) having a styrene block content from 22 % to 45 %,
based on the total weight of the styrene block polymeric component.

In some embodiments, the copolymer (a) is chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, random-block SBR and mixtures thereof.

In some embodiments, the at least one styrene block polymeric component consists of the at least one copolymer (a).

In some embodiments, the copolymer (b) is chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, SBS, SEBS and mixtures thereof.

The invention also relates to the use of a hot melt adhesive composition as described above, for adhering a hygiene disposable article on a fabric, the hygiene disposable article being preferably a nonwoven hygiene disposable article, more preferably chosen from the group consisting of adult incontinent products and feminine care products; and the fabric preferably comprising natural or synthetic fibers, more preferably cotton, nylon, polyester, other man-made fibers, such as Lyocell fibers, or mixtures thereof, more preferably Lyocell fibers, even more preferably eucalyptus-based Lyocell fibers.

The invention also relates to an article comprising at least one interior or exterior surface coated with a hot melt adhesive composition as described above.

The invention also relates to a process for preparing a hot melt adhesive composition as described above, comprising mixing the at least one styrene block polymeric component, the at least one tackifying resin, the at least one plasticizer and the at least one polyolefin wax having an enthalpy of crystallization of at least 45 J/g, optionally with the at least one stabilizer, in the molten state.

The present invention enables to meet the abovementioned need. In particular the invention provides a hot melt adhesive composition exhibiting high peel performances on various types of substrate, especially on fabrics, more particularly fabrics made of Lyocell fibers, even more particularly eucalyptus-based Lyocell fibers. The hot melt adhesive composition of the invention is able to provide good adhesion between two substrates and in particular between a hygiene disposable article and a fabric, while at the same time leaving a low level of residues, and preferably no residue, on the fabric when the disposable article is removed from said fabric.

This is achieved by the presence in the hot melt adhesive composition of a particular type of wax, i.e. a polyolefin wax exhibiting a certain degree of crystallinity, in a specific amount, namely from 3 to 15 % by weight, based on the total weight of the hot melt adhesive composition.

### Detailed description

The invention will now be described in more details without limitation in the following description.

Unless otherwise mentioned, the percentages in the present application are percentages by weight.

In the present text, the amounts indicated for a given species can apply to this species according to all its definitions (as mentioned in the present text), including the narrower definitions.

### Hot melt adhesive composition

In a first aspect, the present invention relates to a hot melt adhesive composition. The term *"hot melt"* is used herein to describe that the adhesive composition requires to be heated at least at 120°C, preferably at least at 140°C, to be applied on a substrate. The hot melt adhesive composition is thus solid at 23°C.

The hot melt adhesive composition of the invention comprises:
- from 5 to 35 % by weight of at least one styrene block polymeric component;
- from 40 to 65 % by weight of at least one tackifying resin;
- from 15 to 40 % by weight of at least one plasticizer;
- from 3 to 15 % by weight of at least one polyolefin wax having an enthalpy of crystallization of at least 45 J/g; and
- from 0 to 5 % by weight of at least one stabilizer;
based on the total weight of the hot melt adhesive composition.

In some embodiments, the hot melt adhesive composition may comprise:
- from 5 to 35 % by weight of at least one styrene block polymeric component;
- from 40 to 65 % by weight of at least one tackifying resin;
- from 15 to 40 % by weight of at least one plasticizer;
- from 3 to 15 % by weight of at least one polyolefin wax having an enthalpy of crystallization of at least 45 J/g;
- from 0 to 3 % by weight of at least one stabilizer; and
- from 0 to 5 % by weight of at least one additive;
based on the total weight of the hot melt adhesive composition.

In some embodiments, the hot melt adhesive composition may essentially consist of, or may consist of, the above-mentioned components in the indicated amounts.

### Styrene block copolymer

The hot melt adhesive composition of the invention comprises at least one styrene block polymeric component. By *"styrene block polymeric component"* is meant a component consisting of at least one SBC (styrene block copolymer) i.e. a copolymer comprising at least one styrene block, including styrene triblock copolymers and styrene diblock copolymers.

Advantageously, the styrene block polymeric component has an average hardness Shore A of about 60 or less, preferably from about 15 to about 60, more preferably from about 20 to about 50. The average hardness Shore A of the styrene block polymeric component is calculated from the hardness Shore A of the styrene block copolymers forming the styrene block polymeric component as follows: the sum of [the hardness Shore A of each copolymer multiplied by its weight proportion (in percent) in the styrene block polymeric component], divided by 100. The hardness Shore A of the copolymers may be determined according to the standard method NF EN ISO 686 at 15 seconds. Advantageously, the average hardness Shore A of the styrene block polymeric component may be of about 55 or less, preferably of about 50 or less, more preferably of about 45 or less, more preferably of about 40 or less, in particular of about 35 or less, more particularly of about 30 or less.

The hot melt adhesive composition comprises from about 5 to about 35 % by weight of styrene block polymeric component, based on the total weight of the hot melt adhesive composition. Preferably, the hot melt adhesive composition comprises from about 10 to about 30 % by weight, more preferably from about 15 to about 25 % by weight, of styrene block polymeric component, based on the total weight of the hot melt adhesive composition. For example, the amount of styrene block polymeric component in the HM adhesive composition may be from 5 to 10 %, or from 10 to 15 %, or from 15 to 20 %, or from 20 to 25 %, or from 25 to 30 %, or from 30 to 35 %, by weight.

Advantageously, the styrene block polymeric component may comprise, based on the total weight of the styrene block polymeric component:
- from 25 to 100 % by weight of at least one linear styrene block copolymer (a) having a styrene block content of 21 % or less and a hardness Shore A of 50 or less;
- from 0 to 75 % by weight of at least one linear styrene block copolymer (b) having a styrene block content of 22 % or more.

By *"styrene block content'* is meant the weight proportion of styrene moieties present in the polystyrene block(s), per total weight proportion of the copolymer.

The styrene block copolymer (a) (herein also called *"copolymer (a)")* may have a styrene block content of from about 10 to about 21 %. Preferably, the polymer (a) has a styrene block content of about 20 % or less (such as from about 10 to about 20 %), more preferably of about 19 % or less (such as from about 10 to about 19 %), even more preferably of about 18 % or less (such as from about 10 to about 18 %).

The styrene block copolymer (b) (herein also called *"copolymer (b)")* has preferably a styrene block content from about 22 % to about 45 %. The polymer (b) may have a styrene block content of about 23 % or more (such as from about 23 to about 45 %), preferably of about 24 % or more (such as from about 24 to about 45 %), more preferably of about 25 % or more (such as from about 25 to about 45 %).

The polymer (a) may have a hardness Shore A of 50 or less, in particular of from about 15 to about 50, preferably from about 20 to about 50. In other embodiments, the polymer (a) may have a hardness Shore A of 45 or less, in particular of from about 15 to about 45, preferably from about 20 to about 45.

The polymer (b) may have a hardness Shore A of more than about 60, preferably of more than 60 to about 90.

As mentioned above, the hardness Shore A of the styrene block copolymers can be measured according to the standard method NF EN ISO 686 at 15 seconds.

The styrene block polymeric component may comprise, based on the total weight of the styrene block polymeric component, from about 35 to about 100 % of copolymer (a) and from about 0 to about 65 % of copolymer (b); preferably from about 45 to about 100 % of copolymer (a) and from about 0 to about 55 % of copolymer (b); more preferably from about 55 to about 100 % of copolymer (a) and from about 0 to about 45 % of copolymer (b).

The styrene block polymeric component may consist of at least one copolymer (a) and at least one copolymer (b), in particular in the amounts mentioned herein. In these embodiments, the styrene block polymeric component is free of any styrene block copolymers other than the copolymers (a) and (b).

Preferably, the styrene block polymeric component consists of at least one copolymer (a), i.e. is comprised of about 100 % of at least one copolymer (a). In these embodiments, the styrene block polymeric component is free of any styrene block copolymers, including the copolymer (b), other than the copolymer (a).

In the embodiments wherein the styrene block polymeric component comprises at least one copolymer (a), it can comprise a single copolymer (a) as described herein, or a combination of two or more copolymers (a) as described herein. In the embodiments wherein the styrene block polymeric component comprises at least one copolymer (b), it can comprise a single copolymer (b) as described herein, or a combination of two or more copolymers (b) as described herein.

Advantageously, the styrene block polymeric component comprises, or consists of, at least two copolymers (a), preferably it comprises, or consists of, two copolymers (a).

The copolymer (a) (and each copolymer (a)) may be chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, random-block SBR, SEBS and mixtures thereof, and even more preferably from the group consisting of SIS, random-block SBR and mixtures thereof.

By *"SBBS"* is meant a styrene-butadiene-butylene-styrene triblock copolymer. By "SBS" is meant a styrene-butadiene-styrene triblock copolymer. By "SEBS" is meant a styrene-ethylene-butylene-styrene triblock copolymer. By *"SEPS"* is meant a styrene-ethylene-propylene-styrene triblock copolymer. By *"SEEPS"* is meant a styrene-ethylene-ethylene-propylene-styrene triblock copolymer. By *"SIBS"* is meant a styrene-isoprene-butadiene-styrene triblock copolymer. By *"SIS"* is meant a styrene-isoprene-styrene triblock copolymer. By *"random-block SBR"* is meant random-block styrene butadiene copolymers (part of the styrene being present as polystyrene blocks). By *"random-block SIR"* is meant random-block isoprene butadiene copolymers (part of the styrene being present as polystyrene blocks). By *"SB"* is meant a styrene-butadiene diblock copolymer. By *"SI"* is meant a styrene-isoprene diblock copolymer. By *"SEB"* is meant a styrene-ethylene-butylene diblock copolymer. By *"SEP'* is meant a styrene-ethylene-propylene diblock copolymer.

Examples of suitable copolymers (a) are commercially available under the tradenames Kraton^{®} D1161 (SIS, styrene block content of about 15 %, diblock content of about 19 %, hardness Shore A of about 31) from Kraton Corporation, Vector^{®} 4114S (SIS, styrene block content of about 15 %, diblock content of about 42 %, hardness Shore A of about 27) from TSRC Corporation, Sinopec^{®} 1126 (SIS, styrene block content of about 16 %, diblock content of about 50 %, hardness Shore A of about 28) from Sinopec, Solprene^{®} 1205 (random-block SBR, styrene block content of about 17.5 %, random styrene content of about 7.5 %, hardness Shore A of about 27) from Dynasol Group, Europrene^{®} 1205 (random-block SBR, styrene block content of about 18 %, random styrene content of about 7 %, hardness Shore A of about 27) from Versalis (Eni), Sinopec^{®} 2605 (random-block SBR, styrene block content of about 18 %, random styrene content of about 7 %, hardness Shore A of about 27) from Sinopec, JH8161 (SIS, styrene block content of about 16 %, diblock content of about 50 %, hardness Shore A of about 25) from Ningbo Jinhai Chenguang Chemical Corporation and Kraton^{®} G1657 (SEBS, styrene block content of about 13 %, diblock content of about 30 %, hardness Shore A of about 47) from Kraton Corporation.

By *"diblock content'* is meant the weight proportion of diblock copolymers in a polymer component.

The copolymer (b) (and each copolymer (b)) may be chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, SBS, SEBS and mixtures thereof.

Examples of suitable copolymers (b) are commercially available under the tradenames Quintac^{®} 3280 (SIS, styrene block content of about 25 %, diblock content of about 17 %, hardness Shore A of about 61) from Zeon Corporation, Europrene^{®} SOL TE9326 (SIS, styrene block content of about 30 %, diblock content of about 15 %, hardness Shore A of about 61) from Polimeri Europa (Eni), Europrene^{®} SOL T166 (SBS, styrene block content of about 30 %, diblock content of about 10%, hardness Shore A of about 72) from Versalis (Eni), Taipol^{®} 6153 (SEBS, styrene block content of about 29 %, diblock content of about 0 %, hardness Shore A of about 79) from TSRC Corporation, Kraton^{®} G1726 (SEBS, styrene block content of about 30 %, diblock content of about 70 %, hardness Shore A of about 77) from Kraton Corporation.

In some embodiments, the hot melt adhesive composition is substantially free of radial styrene block copolymers.

Advantageously, the hot melt adhesive composition comprises a styrene block polymeric component comprising about 100 % by weight of a composition of copolymers (a), said composition of copolymers (a) consisting of at least one SIS copolymer (a) and at least one random-block SBR copolymer (a), more particularly consisting of from about 40 to about 90 % by weight of SIS copolymer (a) and from about 10 to about 60 % of random-block SBR copolymer (a), more preferably from about 50 to about 80 % by weight of SIS copolymer (a) and from about 20 to about 50 % of random-block SBR copolymer (a), even more preferably from about 60 to about 70 % by weight of SIS copolymer (a) and from about 30 to about 40 % of random-block SBR copolymer (a).

The hot melt adhesive composition may have a Brookfield viscosity at 163°C of from about 500 to about 8,000 mPa.s, preferably from about 500 to about 4,000 mPa.s, more preferably from about 800 to about 3,000 MPa.s. The Brookfield viscosity may be measured according to the standard method ASTM D-3236, using a Brookfield viscometer of the type Spindle 27, at a temperature of about 163°C. In some embodiments, the hot melt adhesive composition may have a Brookfield viscosity at 163°C of from 500 to 1,000 mPa.s, or from 1,000 to 2,000 mPa.s, or from 2,000 to 3,000 mPa.s, or from 3,000 to 4,000 mPa.s, or from 4,000 to 6,000 mPa.s, or from 6,000 to 8,000 mPa.s.

The hot melt adhesive composition has advantageously an average peel performance on Lyocell fibers of at least about 0.157 N/cm (0.4 N/inch). More advantageously, the hot melt adhesive composition has an average peel performance on Lyocell fibers of at least about 0.236 N/cm (0.6 N/inch), preferably from 0.236 N/cm (0.6 N/inch) to 1.181 N/cm (3 N/inch), more preferably from 0.236 N/cm (0.6 N/inch) to 0.984 N/cm (2.5 N/inch). For example, the composition may have an average peel performance on Lyocell fibers of at least about 0.276 N/cm (0.7 N/inch), or at least about 0.315 N/cm (0.8 N/inch), or at least about 0.354 N/cm (0.9 N/inch), or at least about 0.394 N/cm (1.0 N/inch). The peel performance on Lyocell fibers is measured according to the method described in the example section below on a fabric made of 83 % Lyocell, 13 % polyamide and 4 % elastane. While the hot melt adhesive composition may be used as an adhesive on a large variety of substrates, and in particular fabrics, the composition is particularly suitable for use as an adhesive on Lyocell fibers, in particular eucalyptus-based Lyocell fibers.

### Tackifying resin

The hot melt adhesive composition comprises at least one tackifying resin (tackifier).

The hot melt adhesive composition comprises from about 40 to about 65 %, preferably from about 45 to about 60 %, more preferably from about 45 to about 55 %, by weight of a tackifying resin, based on the total weight of the hot melt adhesive composition. In particular, the amount of tackifying resin in the composition may be from 40 to 45 % by weight, or from 45 to 50 % by weight, or from 50 to 55 % by weight, or from 55 to 60 % by weight, or from 60 to 65 % by weight.

Suitable tackifying resins for the invention are those which are compatible with the styrene block polymeric component. As tackifying resins suitable for the composition of the invention, mention can be made of the followings:
- Aliphatic petroleum hydrocarbon resins, resulting from the polymerization of monomers consisting primarily of olefins and di-olefins, and the hydrogenated derivatives thereof;
- Cyclic petroleum hydrocarbon resins and the hydrogenated derivatives thereof;
- Aromatic petroleum hydrocarbon resins and the hydrogenated derivatives thereof;
- Aromatic-modified cycloaliphatic resins and the hydrogenated derivatives thereof;
- Polyterpene resins, generally resulting from the polymerization of terpene hydrocarbons (*e.g.* the mono-terpene known as pinene), in the presence of Friedel-Crafts catalysts at moderately low temperatures, and the hydrogenated derivatives thereof;
- Copolymers and terpolymers of natural terpenes (*e.g.* styrene/terpene, α-methyl styrene/terpene and vinyl toluene/terpene);
- Natural and modified rosin (*e.g.* gum rosin, wood rosin, tall-oil rosin, distilled rosin, hydrogenated rosin, dimerized rosin, polymerized rosin, rosin esters and their hydrogenated derivatives);
- Glycerol and pentaerythritol esters of natural and modified rosin (e.g. the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin); and,
- Phenolic-modified terpene resins (*e.g.* the resin product resulting from the condensation in an acidic medium of a terpene and a phenol).

The hot melt adhesive composition may comprise one or more resins chosen from the above-mentioned resins.

More particularly, the hot melt adhesive composition may comprise (or consist of) at least one tackifying resin (a) being chosen from aliphatic petroleum hydrocarbon resins, resulting from the polymerization of monomers consisting primarily of olefins and di-olefins, and the hydrogenated derivatives thereof. The aliphatic petroleum hydrocarbon resins, and the hydrogenated derivatives thereof, may be based on C5 olefins, C9 olefins, di-cyclo-pentadiene (DCPD) and the mixtures thereof. Examples of suitable tackifying resins include those commercially available under the tradenames Eastotac^{®} H100W (resin C5 fully hydrogenated) from Eastman Chemical Company; Escorez^{®} 2203LC (resin C5/C9) from ExxonMobil Chemical company; Sukorez^{®} SU 120 (resin DCPD fully hydrogenated), Sukorez^{®} SU 210 (resin DCPD/C5 fully hydrogenated), Sukorez^{®} SU 420 (resin DCPD/C9 partially hydrogenated), Sukorez^{®} SU525 (resin DCPD fully hydrogenated) and Hikorez^{®} H2100 (resin C5 hydrogenated) from Kolon; Regalite^{®} S7125 (resin C9 partially hydrogenated) from Eastman Chemical Company; HS-130 (resin DCPD hydrogenated) from Hanwha Solutions/chemical Corporation; Luhorez HD1120 (resin DCPD hydrogenated) from Tianjin Luhua Chemical, Eastotac^{®} H100W (resin C5 fully hydrogenated) from Eastman; Regalite^{®} S7125 (C9 partially hydrogenated) from Eastman; Henghe HM1000 (resin DCPD/C9 (3%) hydrogenated) from Henghe Materials and Science Technology Co. LTD and Henghe H5-1001 (resin C5 fully hydrogenated) from Henghe Materials and Science Technology Co. LTD.

Alternatively, the hot melt adhesive composition may comprise (or consist of) at least one tackifying resin (b) chosen from natural and modified rosins and the hydrogenated rosin. Examples of suitable tackifying resins are those commercially available under the tradename Foral^{®} DX (rosin resin fully hydrogenated) and Foral^{®} 105 (rosin ester resin fully hydrogenated) from DRT and Foral^{®} AX-E (rosin resin fully hydrogenated) from Eastman.

The hot melt adhesive composition may comprise a tackifying resin consisting of a mixture of at least one tackifying resin (a) and at least one tackifying resin (b), as described above, preferably a tackifying resin consisting of from about 57 % to about 77 % of tackifying resin (a) and from about 23 to about 43 % of tackifying resin (b), based on the total weight of the tackifying resin, more preferably a tackifying resin consisting of from about 62 % to about 72 % of tackifying resin (a) and from about 28 to about 38 % of tackifying resin (b), based on the total weight of the tackifying resin.

In other embodiments, the hot melt adhesive composition may comprise (or consist of) at least two tackifying resins (a), or two tackifying resins (a). In particular, the tackifying resin may comprise (or consist of) from about 40 to about 80 % of a first tackifying resin (a) and from about 20 to about 60 % of a second tackifying resin (a), more preferably from about 60 to about 75 % of a first tackifying resin (a) and from about 25 to about 40 % of a second tackifying resin (a), based on the total weight of the tackifying resin.

The tackifying resin may have a Ring and Ball softening point (as measured according to ASTM E28) from about 50°C to about 140°C, such as, for example, from about 50 to about 90°C, or from about 90 to about 120°C, or from about 120 to about 140°C.

### Plasticizer

The hot melt adhesive composition of the present invention comprises at least one plasticizer. The plasticizer may be a solid or a liquid plasticizer.

The hot melt adhesive composition comprises from about 15 to about 40 %, preferably from about 20 to about 35 %, more preferably from about 25 to about 30 %, by weight, of a plasticizer, based on the total weight of the hot melt adhesive composition. In some embodiments, the amount of plasticizer in the composition may be from 15 to 20 %, or from 20 to 25 %, or from 25 to 30 %, or from 30 to 35 %, or from 35 to 40 %, by weight.

The plasticizer may be chosen from the group consisting of naphthenic and paraffinic oils, olefin oligomers, low molecular weight polymers, glycol benzoates, vegetable and animal oils, the derivatives thereof, and their mixtures.

The plasticizer may confer good processability to the hot melt adhesive composition. Moreover, the plasticizer may also provide desired viscosity control without substantially decreasing the adhesive strength or the service temperature (temperature of use) of the hot melt adhesive.

Naphthenic oils and paraffinic oils are petroleum-based oils which consist in a mixture of naphthenic hydrocarbons (*e.g.* aliphatic, saturated or unsaturated, C4 to C7-member hydrocarbon rings; preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic, and preferably aromatic C6-member hydrocarbon rings).

The classification of naphthenic and paraffinic oils is made based on the amount of each type of hydrocarbons in the oil. Typically, paraffinic oils have a paraffinic hydrocarbons content of at least about 50 % by weight; naphthenic oils have a naphthenic hydrocarbons content from about 30 % to about 50 % by weight, relative to the total weight of the plasticizer.

Preferably, the plasticizer is a paraffinic oil.

Suitable plasticizers for the invention include those commercially available under the tradenames Nyflex^{®} 223 and Nyflex^{®} 222B (naphtenic oils) from Nynas, Parol^{®} (paraffinic oil), Kaydol^{®} (paraffinic oil) from Sonneborn, Olympus^{®} L500 from Ergon, Primol^{®} 352 and 382 from Exxon Mobil, Calsol^{®} 5550 from Calumet and Karamay N4010 (paraffinic oils) from Petrochina Karamay Petrochemical Co. LTD.

The oligomers may be selected from the group consisting of polypropylene, polybutene, hydrogenated polyisopropene, hydrogenated butadiene, or the like having average molecular weights between about 100 and about 10,000 g/mol.

The vegetable and animal oils may be selected from glycerol esters of fatty acids and polymerization products thereof.

### Wax

The hot melt adhesive composition comprises at least one polyolefin wax that has an enthalpy of crystallization of at least 45 J/g. The enthalpy of crystallization may be measured by DSC analysis, according to ISO 11357-3:1999 but with the following conditions and parameters. On a Mettler DSC 1 analyzer, a sample of 10 mg of wax is cooled under nitrogen flow from 23°C to -70°C for 5 minutes. Then, the temperature is increased from -70°C to 200°C at a heating rate of 10°C/min. After reaching 200°C, the temperature is decreased to -70°C, at a cooling rate of 10°C/min. The enthalpy of crystallization is measured on cooling phase.

The crystalline polyolefin wax is present in the hot melt adhesive composition in an amount of from 3 to 15 % by weight, based on the total weight of the hot melt adhesive composition. Preferably, the hot melt adhesive composition comprises from 3 to 10 % by weight of the crystalline polyolefin wax, based on the total weight of the hot melt adhesive composition. This latter range makes it possible to obtain a more thermally stable adhesive composition. More preferably, the hot melt adhesive composition comprises from 4 to 10 % by weight of the crystalline polyolefin wax, based on the total weight of the hot melt adhesive composition. For example, the amount of polyolefin wax having an enthalpy of crystallization of at least 45 J/g may be from 3 to 5 % by weight, or from 5 to 7 % by weight, or from 7 to 10 % by weight, ore from 10 to 12 % by weight, ore from 12 to 15 % by weight, based on the total weight of the hot melt adhesive composition.

Preferably, the wax of the hot melt adhesive composition consists of the polyolefin wax having an enthalpy of crystallization of at least 45 J/g, i.e. the hot melt adhesive composition is devoid of any other wax.

Preferably, the enthalpy of crystallization of the wax is of at least 62 J/g, more preferably at least 79 J/g, more preferably at least 88 J/g. In some embodiments, the enthalpy of crystallization of the wax is of 97 J/g or less, preferably of 92 J/g or less. The enthalpy of crystallization of the polyolefin wax may be from 45 to 97 J/g, preferably from 62 to 97 J/g, more preferably from 79 to 97 J/g, even more preferably from 79 to 92 J/g. In particular, the enthalpy of crystallization of the polyolefin wax may be from 45 to 54 J/g, or from 54 to 62 J/g, or from 62 to 71 J/g, or from 71 to 79 J/g, or from 79 to 88 J/g, or from 88 to 97 J/g. The higher the enthalpy of crystallization of the wax is, the greater the reduction in residues left after removal of the substrate will be. In addition, a wax having an enthalpy of crystallization of 97 J/g or lower leads to a more thermally stable adhesive composition compared to waxes having a higher crystallinity.

The wax may be any polyolefin wax provided that it has an enthalpy of crystallization greater than or equal to 45 J/g. Preferably, the polyolefin wax is chosen from the group consisting of propylene waxes, polyethylene waxes, ethylene-vinyl acetate (EVA) waxes, ethylene-acrylic acid waxes and combination thereof. More preferably, the polyolefin wax is a polypropylene wax, a polyethylene wax or a mixture thereof, and most preferably is a polypropylene wax.

Advantageously, the polyolefin wax is grafted with at least one acid anhydride and/or at least one carboxylic acid. More preferably, the polyolefin wax is grafted with maleic anhydride.

Preferably, the backbone of the polyolefin wax consists of units derived from propylene, ethylene, vinyl acetate and/or acrylic acid, more preferably units derived from propylene and/or ethylene, even more preferably units derived from propylene. The backbone may be grafted or not, as described above.

Preferably, the crystalline polyolefin wax has an acid value of at least 5 mg KOH/mg, preferably at least 20 mg KOH/mg, more preferably at least 30 mg KOH/mg, more preferably at least 35 mg KOH/mg, more preferably at least 40 mg KOH/mg. The acid value of the wax may be measured according to ISO 2114. The crystalline polyolefin wax may have an acid value of from 5 to 15 mg KOH/mg, or from 15 to 20 mg KOH/mg, or from 20 to 25 mg KOH/mg, or from 25 to 30 mg KOH/mg, or from 30 to 35 mg KOH/mg, or from 35 to 40 mg KOH/mg, or from 40 to 45 mg KOH/mg, or from 45 to 50 mg KOH/mg. The higher the acid value of the wax is, the more thermally stable the adhesive composition will be.

Suitable waxes include those commercially available under the tradenames Licocene^{®} PP MA 6252, Licocene^{®} PP MA 7452, Licocene^{®} PP MA 6422, Licocene^{®} PP MA 6452 and Licocene^{®} PE MA 4351, from Clariant.

### Stabilizer

The hot melt adhesive composition also preferably comprises at least one stabilizer, more preferably at least one antioxidant.

The hot melt adhesive composition comprises from about 0 to about 5 %, preferably from 0 to about 3 %, more preferably from about 0.1 to about 3 %, more preferably from about 0.1 to 2 %, by weight of a stabilizer, based on the total weight of the hot melt adhesive composition.

Suitable stabilizers are incorporated to help protect the polymers noted above, and thereby the total adhesive system, from the effects of thermal and oxidative degradation which normally occurs during the manufacture and application of the adhesive composition, as well as in the ordinary exposure of the final product to the ambient environment. Such degradation is usually manifested by deterioration in the appearance, physical properties and performance characteristics of the hot melt adhesive composition.

Among the applicable stabilizers, more particularly antioxidants, mention can be made of high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(n-octyl-thio)ethyl-3,5-di-tert-butyl-4-hydroxybenzoate and sorbitol hexa-3(3,5-di-tert-butyl-4-hydroxy-phenyl)propionate.

The performance of these antioxidants may be further enhanced by utilizing, in conjunction therewith: (1) synergists such as, for example, thiodipropionate esters and phosphites; examples of these include dialuryl thiodipropionate (DLTDP) and tris(nonylphenyl)phosphite (TNPP), respectively; and (2) chelating agents and metal deactivators as, for example, ethylenediaminetetraacitic acid, salts thereof and disalicylalpropylenediimine.

Suitable antioxidants include those commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) and Irganox^{®} PS800 (propanoic acid, 3,3'-thiobis-1,1'-didodecyl ester) from BASF, Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon.

### Other additives

The hot melt adhesive composition may further comprise at least one other additive, preferably in an amount of from 0 to 5 %, for example from 0.1 to 5 %, by weight, by total weight of the adhesive composition.

The additives may be selected from the group consisting of inert colorants (e.g. titanium dioxide), fillers (e.g. talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, additional polymers other than styrene block copolymers, crosslinking agents, nucleating agents, reactive compounds, fire-retardant mineral or organic agents, ultraviolet (UV) or/and infrared (IR) light absorbing agents, UV or/and IR fluorescing agents, and mixtures thereof. These optional other additives are well known in this art.

The additional polymers may be chosen from the group consisting of polyolefins, amorphous poly-alpha-olefins, ethylene-vinyl acetate polymers (EVA), polyamides, and mixtures thereof. The hot melt adhesive may comprise from about 0 to about 5 % by weight of at least one additional polymer, by total weight of the composition. However, preferably, the holt melt composition does not comprise an additional polymer.

### Process for preparing the HM adhesive composition

The invention also relates to a process for preparing the hot melt adhesive composition as described above.

The hot melt adhesive composition may be prepared by mixing the at least one styrene block polymeric component, the at least one tackifying resin, the at least one plasticizer and the at least one wax, in the molten state. Optional other ingredients or additives of the composition, as described above, in particular the at least one stabilizer, may be mixed with the abovementioned components.

The hot melt adhesive composition of the present invention may be produced using any of the techniques known in the art. Preferably, the step of mixing is carried out at a temperature of from 140 to 160°C. The ingredients are preferably mixed for at least several hours, typically at least 3 hours, and preferably from 3 to 6 hours.

The hot melt adhesive composition according to the invention can be prepared in presence of dioxygen (such as under air atmosphere), or preferably under inert atmosphere *e.g.* under carbon dioxide or nitrogen to limit potential degradation by oxidative reactions.

The process for preparing the hot melt adhesive composition according to the invention preferably comprises:
- a first step of melting and mixing the styrene block polymeric component and the plasticizer,
- a second step of adding the tackifying resin into the mixture obtained in the previous step, under stirring,
- the wax being possibly added either during the second step in mixture with the other ingredients, or subsequently during a subsequent third step in the composition resulting from the second step, under stirring.

Other useful optional ingredients or additives which may be present in the hot melt adhesive composition according to the invention, as described above, may be added at any step of the process according to the invention.

### Uses

The present invention also relates to the use of a hot melt adhesive composition as described above, for adhering a hygiene disposable article on a fabric.

The hygiene disposable article may be chosen from nonwoven hygiene disposable articles, preferably from the group consisting of disposable diapers, training pants, adult incontinent products (pads or briefs), feminine care products (napkins or pads) and surgical masks, more preferably from the group consisting of adult incontinent products (pads or briefs) and feminine care products (napkins or pads).

The fabric may be manufactured utilizing natural or synthetic fibers, including cotton, nylon, polyester, other man-made fibers and mixtures thereof.

Preferably, the fabric is manufactured utilizing Lyocell fibers, more preferably eucalyptus-based Lyocell fibers. Hence, the present invention particularly relates to the use of the hot melt adhesive composition as described above for adhering a hygiene disposable article, particularly an incontinent product (pads or briefs) or a feminine care product (napkins or pads), on a fabric comprising or made from Lyocell fibers, preferably eucalyptus-based Lyocell fibers. By *"Lyocell fibers"* (also known as *"fibers of the Lyocell genus"* or *"solvent-spun fibers")* is meant fibers obtained by a solvent-spinning process, wherein the cellulose is dissolved directly in an aqueous tertiary amine-oxide without the formation of a derivative, and the solution is spun or wherein the cellulose fibers are produced by dissolving cellulose in an organic solvent without the formation of a derivative and extruding fibers from said solution by means of a dry-wet spinning process or a melt-blown process. Lyocell is a generic name allocated by BISFA (The International Bureau for the Standardization of manmade fibers).

The fabric may comprise, or consist of, the above-mentioned fibers.

Lyocell fibers are conventional fibers known in the art. Suitable processes for producing Lyocell fibers are described for example in the U.S. patent 4,246,221 published on 20 January 1981, the PCT application WO 2018/104330 A1 published on 14 June 2018 and the PCT application WO 2009/036481 A1 published on 26 published March 2009, which are incorporated herewith by reference.

An example of manufacturing process is described hereafter. Generally, in the Lyocell process, wood is chipped and digested chemically, to remove the lignin and to soften it enough to be mechanically milled to a wet pulp. This pulp may be bleached. Then, it is dried into a continuous sheet and rolled onto spools. Tertiary amine N-oxides such as N-methylmorpholine N-oxide are most often used as a solvent in the Lyocell process alone or together with water. Other solvents such as N-methylpiperidine-N-oxide, N-methylpyrrolidone-oxide, and dimethylcyclohexylamine oxide can also be used. The pulp is dissolved in N-oxide solvent, giving a solution called *"dope".* During this step, cellulose is impregnated with the tertiary N-oxide solvent. The cellulose solution is then shaped by extrusion or by spinning into air. More particularly, this solution is pumped through spinnerets, devices used with a variety of man-made fibers. The spinneret is pierced with small holes rather like a showerhead; when the solution is forced through it, continuous strands of filament come out. The fibers are drawn in air to align the cellulose molecules, imparting improved physical properties such as its characteristic high strength to the Lyocell fibers. The fibers are then immersed in another solution of amine oxide, this time diluted, which sets the fiber strands. Then, they are washed with de-mineralized water. The Lyocell fibers next pass to a drying area, where the water is evaporated from it. The strands then pass to a finishing area, where a lubricant, which may be a soap or silicone or other agent depending on the future use of the fiber, is applied. This step is basically a detangler, prior to carding and spinning into yarn. The dried, finished fibers are at this stage in a form called tow, a large untwisted bundle of continuous lengths of filament. The bundles of tow are taken to a crimper, a machine that compresses the fiber, giving it texture and bulk. The crimped fiber is carded by mechanical carders, which perform an action like combing, to separate and order the strands. The carded strands are cut and baled for shipment to a fabric mill. The entire manufacturing process, from unrolling the raw cellulose to baling the fiber, takes about two hours. After this, the Lyocell fiber may be processed in many ways. It may be spun with another fiber, such as cotton or wool. The resulting yarn can be woven or knitted like any other fabric, and may be given a variety of finishes, from soft and suede-like to silky.

Lyocell fibers have a high tensile strength, a high wet-modulus and a high loop strength.

According to another aspect, the invention relates to an article comprising at least one interior or exterior surface, preferably at least one exterior surface, coated with the hot melt adhesive composition as described above. The article may be as described above and is preferably a hygiene disposable article, more preferably chosen from the group consisting of adult incontinent products (pads or briefs) and feminine care products (napkins or pads).

### Examples

The following examples illustrate the invention without limiting it.

### Material used in the examples

The components used in the examples are described below.
Polymer 1: Solprene^{®} 1205 from DYNASOL, a random-block SBR (linear random-block styrene-butadiene copolymer with a total styrene content of 25 %, in which 17.5 % of styrene is present as a polystyrene block and 7.5 % as statistic polystyrene blocks in mid-block rubber part) having a hardness Shore A of about 27.
Polymer 2: Sinopec^{®} 1126 from SINOPEC, a SIS (styrene block content of about 16 %, diblock content of about 50 %) having a hardness Shore A of about 28.
Resin 1: Sukorez^{®} SU 420 from KOLON, a DCPD/C9 partially hydrogenated resin.
Resin 2: Foral^{®} DX from PINOVA (DRT), a rosin resin fully hydrogenated. Plasticizer: PRIMOL 382 from EXXON MOBILE, a paraffinic oil.
Wax 1: Licocene^{®} PP MA 6252 from Clariant, a polypropylene wax modified (grafted) with MAH (maleic anhydride), having an acid value of 42 mg KOH/g and an enthalpy of crystallization of about 79 J/g.
Wax 2: Licocene^{®} PP MA 6452 from Clariant, a polypropylene wax modified (grafted) with MAH, having an acid value of 41 mg KOH/g and an enthalpy of crystallization of about 88 J/g.
Wax 3: Licocene^{®} PP MA 6422 from Clariant, a polypropylene wax modified (grafted) with MAH, having an acid value of 5 mg KOH/g and an enthalpy of crystallization of about 88 J/g.
Wax 4: Licocene^{®} PP MA 7452 from Clariant, a polypropylene wax modified (grafted) with MAH, having an acid value of 41 mg KOH/g and an enthalpy of crystallization of about 97 J/g.
Antioxidant: Irganox^{®} 1010 from BASF, which is a phenolic antioxidant (tetrakis(methylene(3,5-di-ter-butyl-4-hydroxyhydrocinnamate))methane).

### Preparation of the adhesive compositions and laminates

The hot melt adhesive compositions were prepared by mixing of their ingredients, in the amounts indicated in the tables below. The polymers, the plasticizer and the stabilizer were mixed together and heated at 145°C until a homogeneous mixture was obtain. Then, the wax and the tackifying resin were added at the same temperature until a homogeneous mixture was obtained. Then, the mixture was cooled down and collected to be used as described below.

A laminate was then prepared as follows using the hot melt adhesive compositions prepared as described above, by means of a Coater CT4400 laminating device (sold by NORDSON).

The laminating device was operated continuously at a line speed of approximately 100 m/minute. Two substrates were used: a release liner and either a polyethylene non breathable back-sheet or a cloth-like back-sheet (non-woven).

The hot melt adhesive composition was heated in the melter at a temperature of 150°C. It was then coated at the same temperature of 150°C and at a coating weight of approximately 15 g/m² on the release paper, by means of a slot nozzle.

For all compositions, the resulting coating pattern was quite adequate and was typical of a good processability. It corresponded to a continuous layer, which was centered on said release paper and along an axis, which is perpendicular to the axis of the reel as which the release film was initially packaged.

The polyethylene non breathable back-sheet or nonwoven cloth-like back-sheet was then put into contact with the coated surface of the release film by means of a nip roll applying a pressure of 1 bar.

### Test methods

### Initial peel performances

The laminate obtained as described above was left for 24 hours at ambient temperature (23°C) and at 50 % relative humidity.

A rectangular strip measuring 2.5 cm by approximately 15 cm was cut out in the coated central area of the laminate. The release film was removed and the sample laminate was folded onto itself over approximately 2.5 cm of the sample, leaving about 10.0 cm of adhesive composition exposed. The fabric was put onto the back-sheet coated with the adhesive composition without any additional force. The laminate was combined with the fabric by two passes of a 2 kg rubber roller at 152.4 cm per minute.

As the fabric, either an underwear from market with a composition of 83 % Lyocell, 13 % Polyamide and 4 % Elastane, or a polyester fabric (100 % polyester, microfiber; quality: 229; color: black 6391014; supplier: Bouvelle S.A.S) was used.

Then, the peel performances of the samples (i.e. the laminates combined with the fabric) were determined as follows.

The two substrates of each sample were separated, starting from one end of the rectangular strip, over approximately 2 cm. The free end of the laminate was fixed to a lower clamping devices connected to a movable part of a tensile testing device and the free end of the fabric was fixed to an upper clamping device connected to a stationary part of the tensile testing device, wherein the stationary and moving parts were located on a vertical axis and spaced by 50 mm.

While a drive mechanism communicated, to the movable part, a uniform speed of 500 mm/minute, resulting in the separation of the two substrates, the separated ends of which were gradually displaced along a vertical axis while forming an angle of 180°, the stationary part, connected to a dynamometer, measured the force withstood by the sample thus held.

The result corresponding to the initial peel was expressed in N/2.5 cm.

### Residue evaluation

The quantity of residues left was determined after an *"in-use peel test".*

The in-use peel test was carried out as follows: samples of laminates combined with a fabric were prepared as described above in the section *"Initial peel performances".* The fabric used in this test was a polyester fabric (as described above). After reeling, the samples were placed on a poly(methyl methacrylate) plate, with the fabric facing up, in an oven at 40.6°C, under a load of 250 g for 4 hours. Then, the weights were removed and the samples were taken out from the oven. The samples were conditioned for 45 to 120 minutes. The samples were then subjected to a peel test as described above in the section *"Initial peel performances".*

The residues left after the in-use peel test were assessed by visual inspection. The polyester fabric was observed carefully and when the presence of white spots on the black fabric was noticed, the residue score was noted as "Yes". When no white spots of glue were observed on the fabric after the peel test, the residue score was noted as *"No".*

### Brookfield viscosity

The Brookfield viscosity was measured according to the standard method ASTM D-3236, using a Brookfield viscometer of the type Spindle 27, at a temperature of about 163°C.

### Results

In the following tables, the amounts of the components of the compositions are indicated in parts by weight.

| **Composition No.** | **1 (comp.)** | **2 (comp.)** | **3** | **4** | **5** | **6** | **7** |
|---|---|---|---|---|---|---|---|
| **Components** | | | | | | | |
| **Plasticizer** | 27.1 | 27.1 | 27.1 | 27.1 | 27.1 | 27.1 | 27.1 |
| **Wax 1** | | 2 (1.96%) | 5 (4.76%) | | | | 15 (13,03%) |
| **Wax 2** | | | | | 5 (4.76%) | | |
| **Wax 3** | | | | | | 5 (4.76%) | |
| **Wax 4** | | | | 5 (4.76%) | | | |
| **Resin 1** | 34.9 | 34.9 | 34.9 | 34.9 | 34.9 | 34.9 | 34.9 |
| **Resin 2** | 17.2 | 17.2 | 17.2 | 17.2 | 17.2 | 17.2 | 17.2 |
| **Polymer 1** | 7.2 | 7.2 | 7.2 | 7.2 | 7.2 | 7.2 | 7.2 |
| **Polymer 2** | 13.2 | 13.2 | 13.2 | 13.2 | 13.2 | 13.2 | 13.2 |
| **Antioxidant** | 0.5 | 0.5 | 0.5 | 0.5 | 0.5 | 0.5 | 0.5 |

| **Properties** | | | | | | | |
|---|---|---|---|---|---|---|---|
| **Viscosity at 163°C (mPa)** | 1354 | 1384 | 1390 | 1707 | 2264 | 1390 | 1079 |
| **Initial peel on Lyocell fabric (N /2.5cm)** | 0.63 | 1.01 | 0.6 | 0.64 | 0.60 | 0.7 | 0.8 |
| **Initial peel on polyester fabric (N /2.5cm)** | 3.0 | ND | 3.0 | 3.5 | 2.5 | 3.2 | ND |
| **Residue** | Yes | Yes | No | No | No | No | No |

| | | | | | | | |
|---|---|---|---|---|---|---|---|
| ND = Not determined. | | | | | | | |

The peel performances are considered as excellent when they reach at least 0.6 N/2.5 cm.

Compositions No. 1 and 2 are comparative compositions; compositions 3 to 7 are compositions according to the invention.

All the compositions tested for their peel performances on polyester fabric showed good adhesion properties on this fabric.

The compositions according to the invention all exhibited a satisfactory peel performance on Lyocell fabric. In addition, they left no visible residues after peeling of the substrate from the polyester fabric.

In contrast, the use of comparative compositions No.1 and 2 comprising no wax or comprising an amount of crystalline polyolefin wax of less than 3 % resulted in the presence of adhesive residues when the substrate was removed.

## Claims

1. A hot melt adhesive composition comprising:
- from 5 to 35 % by weight of at least one styrene block polymeric component;
- from 40 to 65 % by weight of at least one tackifying resin;
- from 15 to 40 % by weight of at least one plasticizer;
- from 3 to 15 % by weight of at least one polyolefin wax having an enthalpy of crystallization of at least 45 J/g; and
- from 0 to 5 % by weight of at least one stabilizer;
based on the total weight of the hot melt adhesive composition.

2. The hot melt adhesive composition according to claim 1, wherein the at least one polyolefin wax is grafted with at least one acid anhydride and/or at least one carboxylic acid, preferably maleic anhydride.

3. The hot melt adhesive composition according to claim 1 or 2, wherein the at least one polyolefin wax has an acid value of at least 5 mg KOH/mg, preferably at least 30 mg KOH/mg, more preferably at least 40 mg KOH/mg.

4. The hot melt adhesive composition according to any one of claims 1 to 3, wherein the at least one polyolefin wax has an enthalpy of crystallization higher than or equal to 62 J/g, preferably higher than or equal to 79 J/g, more preferably higher than or equal to 88 J/g.

5. The hot melt adhesive composition according to any one of claims 1 to 4, wherein the at least one polyolefin wax has an enthalpy of crystallization lower than or equal to 97 J/g, preferably lower than or equal to 92 J/g.

6. The hot melt adhesive composition according to any one of claims 1 to 5, comprising from 4 to 10 % by weight of the at least one polyolefin wax, based on the total weight of the hot melt adhesive composition.

7. The hot melt adhesive composition according to any one of claims 1 to 6, wherein the at least one polyolefin wax is a polypropylene wax and/or a polyethylene wax, preferably a polypropylene wax.

8. The hot melt adhesive composition according to any one of claims 1 to 7, wherein the at least one styrene block polymeric component has an average hardness Shore A of 60 or less, preferably from 15 to 60, more preferably from 20 to 50.

9. The hot melt adhesive composition according to any one of claims 1 to 8, wherein the at least one styrene block polymeric component comprises, and preferably consists of:
- from 25 to 100 % by weight of at least one linear styrene block copolymer (a) having a styrene block content of 21 % or less and a hardness Shore A of 50 or less;
- from 0 to 75 % by weight of at least one linear styrene block
copolymer (b) having a styrene block content from 22 % to 45 %, based on the total weight of the styrene block polymeric component.

10. The hot melt adhesive composition according to claim 9, wherein the copolymer (a) is chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, random-block SBR and mixtures thereof.

11. The hot melt adhesive composition according to claim 9 or 10, wherein the at least one styrene block polymeric component consists of the at least one copolymer (a).

12. The hot melt adhesive composition according to claim 9 or 10, wherein the copolymer (b) is chosen from the group consisting of SB, SI, SEB, SEP, SBBS, SBS, SEBS, SEPS, SEEPS, SIBS, SIS, random-block SBR, random-block SIR and mixtures thereof, preferably from the group consisting of SBBS, SBS, SEBS, SEPS, SEEPS, SIBS, SIS, random-block SBR, random-block SIR and mixtures thereof, more preferably from the group consisting of SIS, SBS, SEBS and mixtures thereof.

13. Use of the hot melt adhesive composition according to any one of claims 1 to 12, for adhering a hygiene disposable article on a fabric, the hygiene disposable article being preferably a nonwoven hygiene disposable article, more preferably chosen from the group consisting of adult incontinent products and feminine care products; and the fabric preferably comprising natural or synthetic fibers, more preferably cotton, nylon, polyester, other man-made fibers, such as Lyocell fibers, or mixtures thereof, more preferably Lyocell fibers, even more preferably eucalyptus-based Lyocell fibers.

14. An article comprising at least one interior or exterior surface coated with the hot melt adhesive composition of any one of claims 1 to 12.

15. A process for preparing the hot melt adhesive composition of any one of claims 1 to 12, comprising mixing the at least one styrene block polymeric component, the at least one tackifying resin, the at least one plasticizer and the at least one polyolefin wax having an enthalpy of crystallization of at least 45 J/g, optionally with the at least one stabilizer, in the molten state.
